# EUROPÄISCHE PATENTANMELDUNG

(11) **EP 1 008 824 A2**
(43) Veröffentlichungstag der Anmeldung: **14.06.2000**
(21) Anmeldenummer: 99116419.5
(22) Anmeldetag: 20.08.1999
(51) Int. Cl.: F27D 3/00, F27D 5/00

(54) **Querfördervorrichtung für einen stapelbaren Träger, sowie Träger und Verfahren zum Betreiben einer solchen Fördervorrichtung**

(30) Priorität: 04.12.1998 DE 19856142
(71) Anmelder: Lükon Paul Lüscher Werke AG, 2575 Täuffelen (CH)
(72) Erfinder: Lüscher, Markus, 2575 Täuffelen (CH)
(74) Vertreter: Winter, Brandl & Partner

(57) **Zusammenfassung**

Es wird eine Querfördervorrichtung bereitgestellt, die eine an der Förderschiene verschiebbar angeordnete Greifeinrichtung umfaßt. Die Greifeinrichtung wiederum umfaßt jeweils zwei Greifer, die sich quer zur Förderschiene erstrecken und jeweils Gabelelemente aufweisen. Die Gabelelemente greifen an einer entsprechend geformten Aufliegefläche an den Abstandselementen der zu befördernden stapelbaren Träger an. Das einzige bewegliche Teil der Greifeinrichtung ist die Halterung, mittels der die Greifeinrichtung verschiebbar an der Förderschiene gehaltert ist. Die Greifer selbst und ihre Komponenten, Haltearm und Gabelelement, sind starr ausgebildet und umfassen keine weiteren beweglichen Teile.

## Beschreibung

Die Erfindung betrifft eine Querfördervorrichtung für in einem Stapel aufeinanderliegende Träger für zu trasnportierende Produkte, insbsondere für Träger, die einen Durchlaufofen in vertikaler Richtung durchlaufen, besonders für eine solche Querfördervorrichtung geeigneten Träger sowie ein Verfahren zum Betreiben einer solchen Querfördervorrichtung.

Bei der Herstellung von Halbleitern werden häufig Rein- und Reinstraumbedingen gefordert. Deshalb ist es wichtig, daß beim Umgang mit den Halbleitermaterialien keine schleifenden Kontakte auftreten, die zu Abrieb und damit zu unerwünschten Verureinigungen führen könnten.

Aus der DE-A1-196 19 485 ist ein vertikaler Durchlaufofen und eine hierfür besonders geeignete Querfördereinrichtung bekannt, mittels der vertikal von unten nach oben transportierte Träger mit Halbleiterprodukten horizontal wegtransportiert werden können. Dieser bekannte greifzangenartige Mechanismus zum Aufnehmen der Träger ist vergleisweise kompliziert.

Ausgehend von der DE-A1-196 19 485 ist es Aufgabe der vorliegenden Erfindung, eine Querfördervorrichtung anzugeben, die einfach im Aufbau ist und bei der der Abrieb während des Betriebs minimiert ist. Weiter ist es Aufgabe der vorliegenden Erfindung einen hierfür besonders geeigneten stapelbaren Träger anzugenben. Weiter ist es Aufgabe der Erfindung ein Verfahren zum Betreiben der Querfördervorrichtung anzugeben.

Die Lösung dieser Aufgabe erfolgt durch die Merkmale des Ansprüche 1, 4 bzw. 10.

Die erfindungsgemäße Querfördervorrichtung umfaßt eine an der Förderschiene verschiebbar angeordnete Greifeinrichtung, die jeweils zwei Greifer umfaßt, die sich quer zur Förderschiene erstrecken und jeweils Gabelelemente umfassen. Die Gabelelemente greifen an einer entsprechend geformten Aufliegefläche an den Abstandselementen der zu befördernden stapelbaren Träger an. Das einzige bewegliche Teil der Greifeinrichtung ist die Halterung mittels der sie an der Förderschiene verschiebbar ist. Die Greifer selbst und ihre Komponenten, Haltearm und Gabelelement, sind starr ausgebildet und umfassen keine weiteren beweglichen Teile.

Der gesamte Trägerstapel wird so angehoben, daß die Aufliegeflächen an den Abstandselementen des obersten Trägers mit den Gabelelementen der Greifeinrichtung fluchten. Durch Bewegung der Greifeinrichtung in Förderrichtung entlang der Förderschiene werden die Gabelelemente mit dem Abstandsbolzen bzw. den Trägern in Eingriff gebracht. Anschließend wird der Stapel abgesenkt, so daß der oberste Träger in der Greifeinrichtung hängenbleibt. Anschließend erfolgt der Quertransport des Trägers entlang der Förderschiene. Das Ablegen des Trägers erfolgt dann in umgekehrter Reihenfolge.

Gemäß einer vorteilhaften Ausgestaltung der Erfindung bestehen die Gabelelemente aus einer Platte mit einer U-förmigen Ausnehmung. Dies gewährleistet eine einfache Herstellung der Gabelelemente.

Gemäß einer weiteren vorteilhaften Ausgestaltung der Erfindung sind die Ränder der U-förmige Ausnehmung nach oben hin abgeschrägt, wodurch sich bei Aufnahme des Trägers eine selbstätige Zentrierung bzw. Fixierung des Trägers in der Greifeinrichtung ohne Spiel ergibt.

Der erfindungsgemäße Träger selbst für die zu befördernden Produkte umfaßt Abstandselemente, vorzugsweise vier, die im Randbereich des Trägerrahmens angeordnet sind und mittels denen die einzelnen Träger aufeinander stapelbar sind. Die Auflegefläche für die Gabelelemente der Greifeinrichtung sind an dem Abstandselementen angeordnet. Durch die Ausbildung der Abstandselemente in unterschiedlichen Längen läßt sich die Trägerdichte in einem Stapel variieren. Damit ist eine Anpassung an unterschiedliche zu befördernde Produkte oder eine Optimierung der sich im Durchlaufofen befindlichen Produkte hinsichtlich Heizleistung, Durchlaufzeit etc. erreichbar.

Die Abstandselemente sind vorzugsweise auswechselbar gestaltet, so daß ein und derselbe Trägerrahmen mit unterschiedlich langen Abstandselementen verwendet werden kann.

Gemäß einer weiteren vorteilhaften Ausgestaltung der Erfindung kann die Aufliegefläche in Form einer radial umlaufenden Einkerbung an den Abstandselementen ausgebildet sein oder alternativ als ein radial umlaufender Kragen.

Gemäß einer weiteren vorteilhaften Ausgestaltung der Erfindung ist die Aufliegefläche unmittelbar über dem Trägerrahmen an den Abstandselementen ausgebildet. Hierdurch wird gewährleistet, daß unabhängig von der Länge der Abstandselemente bzw. des Abstandes zwischen den einzelnen Trägern die Greifeinrichtung immer an der gleichen Position angreifen kann.

Die übrigen Unteransprüche beziehen sich auf weitere vorteilhafte Ausgestaltungen der Erfindung.

Die vorliegende Erfindung ist insbesondere für die Kombination mit einer Vertikalfärdervorrichtung geeignet, wie sie aus der DE-A-198 09 555.4 oder der DE-A-196 19 486.5 bekannt sind. Insofern wird auf diese Anmeldungen vollinhaltlich bezug genommen.

Weitere Einzelheiten, Merkmale und Vorteile der Erfindung ergeben sich aus der nachfolgenden Beschreibung einer bevorzugten Ausführungsform der Erfindung.

Es zeigt:
Fig. 1a und 1b einen Schnitt durch eine beispielhafte Ausführungsform der Erfindung;
Fig. 2a bis 2c eine perspektifische Darstellung des In-Eingriff-bringens des Gabelelements in das Abstandselement eines Trägers;
Fig. 3 eine Detaildarstellung eines Abstandelements eines Trägers; und
Fig. 4a bis 4d eine schematische Darstellung zur Funktionsweise der Erfindung.

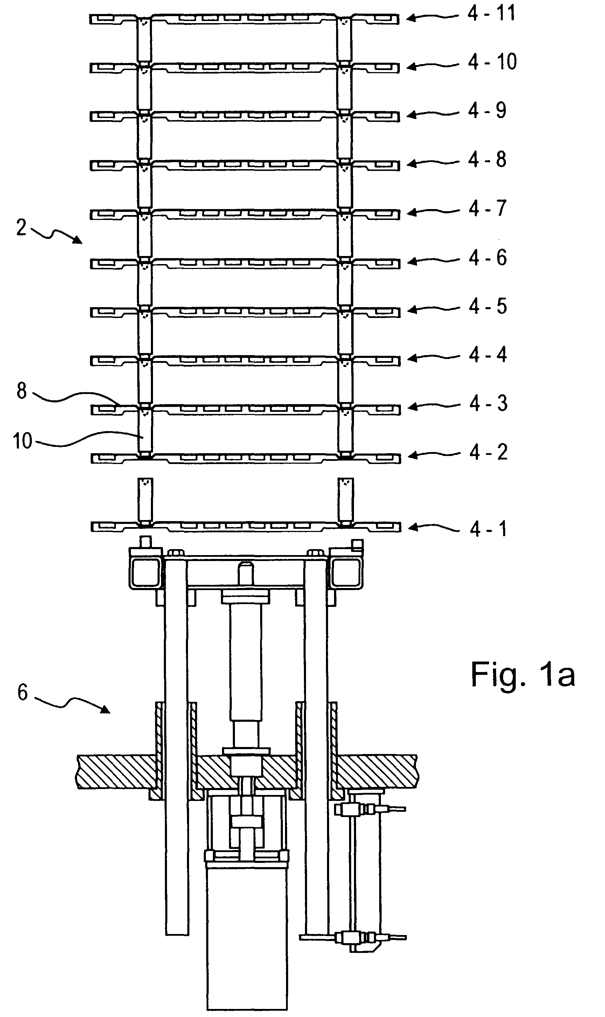

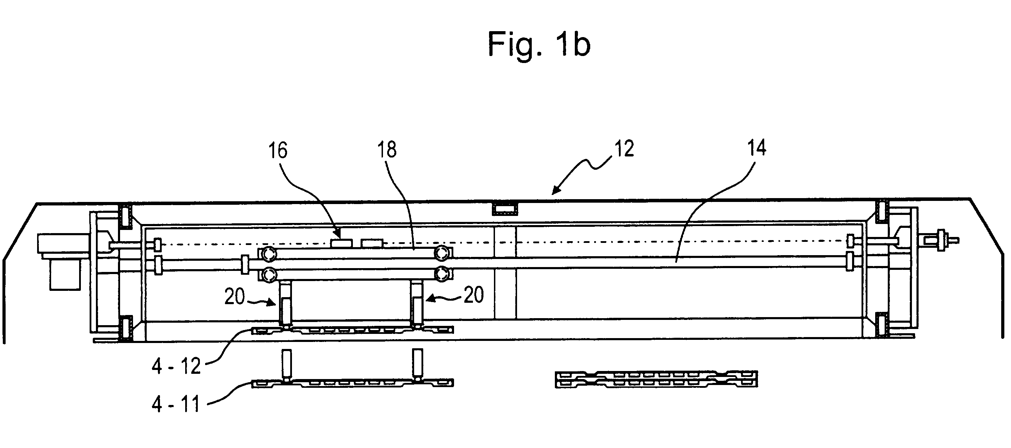

Fig. 1a und 1b zeigen eine Schnittdarstellung durch eine beispielhafte Ausführungsform der Erfindung, wobei sich die Fig. 1b oben an die Fig. 1a anschließt. Aus zeichnerischen Gründen sind Fig. 1a und 1b nicht im gleichen Maßstab dargestellt.

Fig. 1a zeigt eine Stapel 2 mit einer Mehrzahl von stapelbaren Trägern 4-i. Der unterste Träger 4-1 des Stapels 2 ist mit einer Hubeinrichtung 6 in Eingriff bringbar, so daß der Stapel 2 mittels der Hubeinrichtung 6 angehoben und abgesenkt werden kann. Die einzelnen Träger umfassen jeweils einen Trägerrahmen 8 und an den Trägerrahmen befestigte Abstandselemente 10. Bei dem in der Ausführungsform gezeigten beispielhaften rechteckigen Trägerrahmen 8 sind jeweils an den beiden Längsseiten zwei Abstandselemente, also insgesamt vier Abstandselemente, befestigt. An den Abstandselementen 10 liegen die einzelnen Träger 4-i aufeinander.

Fig. 1b zeigt einen Schnitt durch die über dem Stapel 2 angeordnete Querfördervorrichtung 12. In Fig. 1b sind die beiden obersten Träger 4-11 und 4-12 des Stapels 2 gezeigt, wobei das oberste Trägerelement 8-12 bereits vom Stapel 2 abgehoben worden ist. Die Querfördervorrichtung 12 umfaßt eine Förderschiene 14, an der eine Greifeinrichtung 16 in Förderrichtung verschiebbar angeordnet ist. Die Greifeinrichtung 16 umfaßt eine Halterung 18 mittels der die Greifeinrichtung 16 an der Förderschiene 14 beweglich bzw. verschiebbar befestigt ist. An der Halterung 18 sind vier Greifer 20 starr befestigt. Die Greifer 20 umfassen jeweils einen Haltearm 22, der sich senkrecht zu der Förderschiene 14 nach unten erstreckt und der starr mit der Halterung 18 verbunden ist. An dem von der Förderschiene 14 abgewandten Ende der Haltearme 22 ist jeweils ein Gabelelement 24 befestigt. Die Gabelelemente 24 sind durch Bewegung der Greifeinrichtung 16 entlang der Förderschiene 14 mit einer entsprechenden Anliegefläche 26 an den Abstandselementen 10 der Träger 4 in Eingriff bringbar. Die Gabelelemente 24 umfassen eine Platte 28 mit einer U-förmigen Ausnehmung 30 deren Ränder 32 abgeschrägt ausgebildet sind, wobei sich die Ränder 32 von oben nach unten verjüngen.

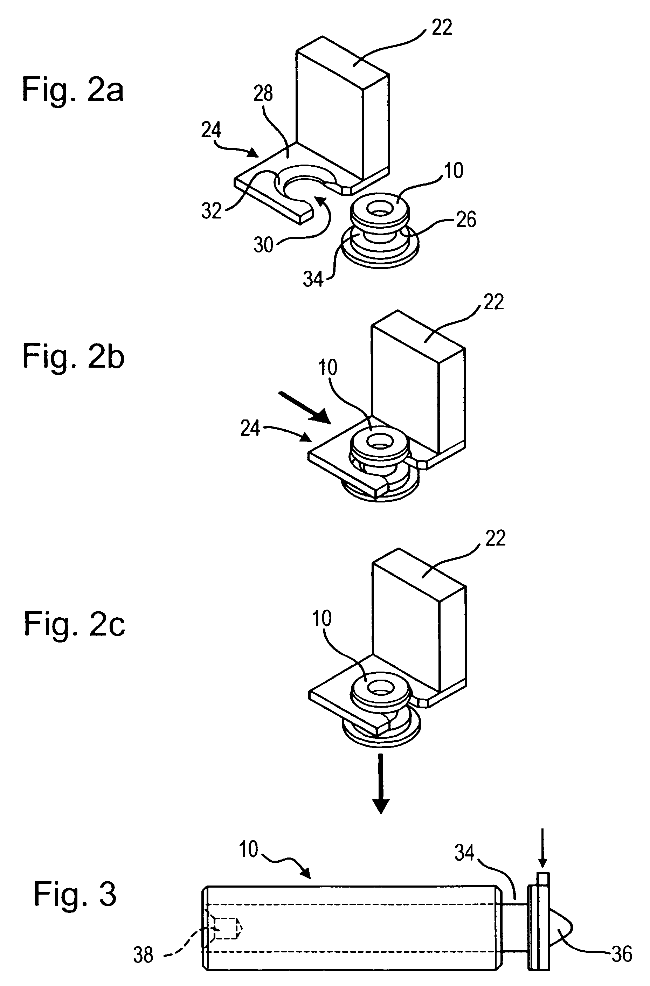

Wie aus den Fig. 2a bis 2c zu ersehen ist, greift die U-förmige Ausnehmung 30 in eine dazu passende radial umlaufende Einkerbung 34 an den Abstandselementen 10 ein, d.h. die Anliegefläche 26 wird durch die radial umlaufende Einkerbung 34 bereitgestellt. Die Einkerbung 34 befindet sich unmittelbar über dem Trägerrahmen 8 an dem Abstandselement 10. Auf diese Weise können die Gabelelemente 24 immer in gleicher Höhe in die Einkerbung 34 eingreifen.

Eine Detailansicht des Abstandselements 10 ist in Fig. 3 gezeigt. Das Abstandelement 10 ist an der mit einem Pfeil gekennzeichneten Stelle an dem Trägerrahmen 8 befestigt. Aus Fig. 3 ist auch zu ersehen, daß die Abstandselemente 10 an ihrer Unterseite einen sich verjüngenden Zapfen 36 umfassen, der zu einer entsprechenden geformten Zapfenaufnahme 38 an der Oberseite der Abstandselemente 10 paßt. Durch den Zapfen 36 und die zugehörige passende Zapfenaufnahme 38 wird der Halt der Träger aufeinander gewährleistet und durch die konische Form wird eine Selbstzentrierung bewirkt.

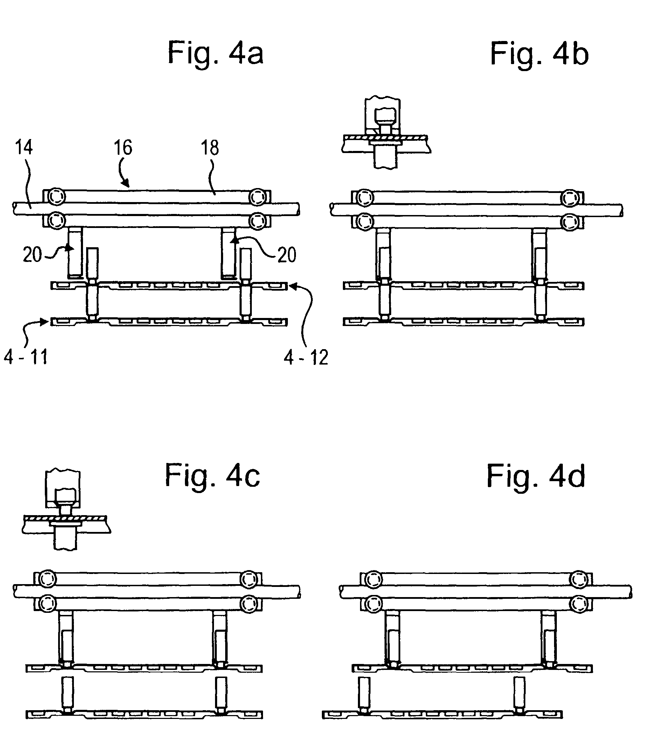

Die Fig. 4a bis 4d zeigen schematisch die Funktionsweise der erfindungsgemäßen Querfördervorrichtung. In Fig. 4a liegt der oberste Träger 4-12 noch auf dem darunterliegenden Träger 4-11 auf. Die Greifeinrichtung 16 mit den Gabelelementen 24 fluchtet mit den Einkerbungen 34 in den Abstandselementen 10 des obersten Trägers 4-12. In Fig. 4b wird die Greifeinrichtung 16 in Förderrichtung bewegt und die U-förmigen Ausnehmungen 30 der Gabelelemente 24 greifen in die Einkerbungen 34 ein. In Fig. 4c wird der restliche Stapel 2 abgesenkt und der oberste Träger 4-12 bleibt in den Gabelelementen 24 der Greifeinrichtung 16 hängen. In Fig. 4d wird die Greifeinrichtung 16 weiter in Förderrichtung bewegt und der Träger 4-12 wird in Förderrichtung transportiert. Das Ablegen des auf diese Weise transportierten Trägers 4-12 auf einem weiteren nicht näher dargestellten Stapel oder auf einer sonstigen Ablagefläche geschieht dann in umgekehrter Reihenfolge.

### Bezugszeichenliste:

- 2: Stapel
- 4-i: Träger
- 6: Hubeinrichtung
- 8: Trägerrahmen
- 10: Abstandselement
- 12: Querfördervorrichtung
- 14: Förderschiene
- 16: Greifeinrichtung
- 18: Halterung
- 20: Greifer
- 22: Haltearm
- 24: Gabelelement
- 26: Anliegefläche
- 28: Platte
- 30: U-förmige Ausnehmung
- 32: abgeschrägter Rand
- 34: Einkerbung
- 36: Zapfen
- 38: Zapfenaufnahme

## Patentansprüche

1. Fördervorrichtung zum Abnehmen eines stapelbaren Trägers (4) von einem Stapel (2) und zum Befördern des Trägers (4) in einer Förderrichtung quer zum Stapel (2) in gerader Richtung, insbesondere zur Verwendung mit einem vertikalen Durchlaufofen, mit
einer Einrichtung (6) zum Anheben und Absenken des Stapels (2),
wenigstens einer in Förderrichtung angeordneten Förderschiene (14),
einer entlang der Förderschiene (14) verschiebbar angeordneten Greifeinrichtung (16) durch die der Träger (4) gehalten wird, und
wobei die Greifeinrichtung (16) eine Halterung (18) umfaßt, an der wenigstens zwei Greifer (20) starr befestigt sind,
wobei die Greifer (20) jeweils einen sich im wesentlichen senkrecht zu der Förderschiene (14) erstreckenden Haltearm (22) umfassen, an deren von der Förderschiene abgewandten Ende jeweils ein Gabelelement (24) befestigt ist, und
wobei durch Anheben des Stapels (2), Bewegung der Greifeinrichtung (16) in Förderrichtung und durch Absenken des Stapels (2) die Gabelelemente mit dem Träger in Eingriff bringbar sind.

2. Fördervorrichtung nach Anspruch 1, dadurch gekennzeichnet, daß die Gabelelement (24) jeweils eine Platte (28) mit einer U-förmigen Ausnehmung (30) umfassen.

3. Fördervorrichtung nach Anspruch 2, dadurch gekennzeichnet, daß die U-förmigen Ausnehmung (30) nach oben hin abgeschrägte Ränder (32) aufweist.

4. Stapelbarer Träger, insbesondere für eine Fördervorrichtung nach einem der vorhergehenden Ansprüche, mit
einem flächigen Trägerrahmen (8) für zu befördernde Produkte,
einer Mehrzahl von an dem Trägerrahmen (8) befestigten Abstandselementen (10), die sich nach unten und oben von dem Trägerrahmen (8) wegerstrecken,
wobei die Abstandselemente (10) jeweils obere und untere Kontaktbereichen (36, 38) aufweisen an denen die einzelnen Träger (4) im Stapel (2) aufeinanderliegen, dadurch gekennzeichnet,
daß die Abstandselemente (10) eine quer zu ihrer Längenerstreckung verlaufende Aufliegefläche (26) aufweisen.

5. Träger nach Anspruch 4, dadurch gekennzeichnet, daß die Aufliegefläche (26) durch eine radial umlaufende Einkerbung (34) gebildet ist.

6. Träger nach Anspruch 4, dadurch gekennzeichnet, daß die Aufliegefläche (26) durch einen radial umlaufenden Kragen gebildet ist.

7. Träger nach einem der vorhergehenden Ansprüche 4 bis 6, dadurch gekennzeichnet, daß die Aufliegefläche (26) abgeschrägt ist.

8. Träger nach einem der vorhergehenden Ansprüche 4 bis 7, dadurch gekennzeichnet, daß die Aufliegefläche (26) unmittelbar über dem Trägerrahmen (8) an dem Abstandselement (10) ausgebildet ist.

9. Träger nach einem der vorhergehenden Ansprüche 4 bis 8, dadurch gekennzeichnet, daß die Abstandselemente (10) auswechselbar sind.

10. Verfahren zum Abnehmen eines stapelbaren Trägers (4) von einem Stapel (2) und zum Befördern des Trägers (4) in einer Förderrichtung quer zum Stapel (2) mit einer Vorrichtung nach einem der vorhergehenden Ansprüche 1 bis 3, mit den Verfahrensschritten:
- Anheben des Stapels (2), so daß der oberste Träger (4-12) mit der Greifeinrichtung (16) in Eingriff bringbar ist;
- In-Eingriff-Bringen der Greifeinrichtung (16) mit dem obersten Träger (4-12) durch Bewegen der Greifeinrichtung (16) in Förderrichtung;
- Absenken des restlichen Stapels (2); und
- Befördern des obersten Trägers (4-12) durch Bewegung der Greifeinrichtung in Förderrichtung.
